# DEMANDE DE BREVET EUROPEEN

(11) **EP 0 822 037 A1**
(43) Date de publication de la demande: **04.02.1998**
(21) Numéro de dépôt: 97420137.8
(22) Date de dépôt: 30.07.1997
(51) Int. Cl.: B25H 5/00, B25H 3/06, F16M 11/40, B25H 1/14

(54) **Dispositif d'assistance pour travaux manuels**

(30) Priorité: 31.07.1996 FR 9609884
(71) Demandeur: Canovas, Ginès, 69480 Anse (FR); O'Burill, Alain, 69650 Saint Germain au Mont d'or (FR)
(72) Inventeur: Canovas, Ginès, 69480 Anse (FR); O'Burill, Alain, 69650 Saint Germain au Mont d'or (FR)

(57) **Abrégé**

Ce dispositif comprend un bac (2), ouvert vers le haut, solidaire de l'une des extrémités d'un flexible (3) conservant la déformation qui lui est donnée manuellement, et dont l'autre extrémité est liée, avec possibilité d'orientation angulaire, à un moyen (4) de fixation sur un support.

Selon les formes d'exécution, le moyen (4) de fixation est constitué par une ventouse, un serre joint ou une pince.

## Description

L'invention est relative à un dispositif d'assistance pour les travaux manuels.

Lorsqu'un professionnel ou un amateur réalise des travaux manuels, et par exemple des travaux de démontage de pièces mécaniques, ou des travaux d'entretien, il rencontre des difficultés pour poser les éléments démontés ou ses outils, sans risque de les égarer ou de salir un support.

Il en est plus particulièrement ainsi dans les travaux de mécanique automobile au cours desquels le mécanicien démonte l'organe du moteur ou ses accessoires ou tout autre pièce du véhicule, car il ne peut pas poser les pièces démontées sur la carrosserie entourant le compartiment moteur, en général très arrondi et très sensible aux rayures. De ce fait, il doit avoir recours au plateau supérieur de la servante contenant ses outils, ce qui l'oblige à changer de position fréquemment et allonge la durée de l'intervention.

Il en est de même pour les peintres travaillant sur des huisseries qui, lorsqu'ils doivent changer de pinceau ou passer temporairement à une autre phase de travail, ne disposent d'aucun moyen pour poser leur outillage à proximité de la zone de travail.

La demande de brevet allemand 3 810 308 décrit un dispositif d'assistance dans lequel un bac de réception des outils ou pièces est relié à un moyen de fixation, de type ventouse à levier, par une structure permettant de modifier la position du bac dans l'espace. Cette structure est composée d'au moins une barre rigide dont la liaison sur le bac et sur le moyen de fixation est assurée par des articulations avec moyens de blocage déblocable manuellement. Le réglage de la position du bac nécessite de débloquer les articulations, de déplacer manuellement le bac et la barre pour les amener dans la position voulue, puis de rebloquer les articulations. Cette dernière opération est malaisée car elle nécessite de bloquer les deux articulations tout en maintenant la position du bac et de la structure, c'est à dire nécessite plus de deux mains, à défaut de quoi la position choisie est modifiée.

Un autre inconvénient de ce type de dispositif est qu'il ne permet de régler la position du bac que dans un plan, ou dans deux plans, selon que la structure comporte une ou deux barres, ce qui est insuffisant.

La présente invention a pour objet de remédier à ces inconvénients en fournissant un dispositif d'assistance dans lequel le bac peut être amené dans n'importe quelle position de l'espace sans qu'il y ait à procéder à des manoeuvres de déblocage et de blocage.

A cet effet, dans le dispositif d'assistance pour travaux manuels selon l'invention, la structure entre le bac et le corps du moyen de fixation sur un support est constituée par un flexible composé d'un ressort métallique enroulé à spires faiblement espacées et d'un profilé métallique qui, enroulé autour du ressort, présente une section transversale sensiblement triangulaire dont l'un des angles s'insère dans l'intervalle entre spires de ce ressort et est pincé par celles-ci, ce flexible, conservant la déformation qui lui est donné manuellement, étant solidaire, à l'une de ses extrémités, d'un embout rigide muni de moyens de liaison filetée avec des moyens complémentaires du bac et, à son autre extrémité, d'un autre embout rigide muni de moyens de liaison filetés, ces derniers moyens coopérant avec des moyens complémentaires du corps des moyens de fixation.

Grâce à cet agencement, l'opérateur peut fixer le moyen de fixation sur l'un des éléments de son environnement tels que carrosserie, vitrages, et, par cintrage du flexible, donner au bac une position dans l'espace, c'est à dire dans trois plans orthogonaux, de manière que le fond de ce bac soit sensiblement horizontal, afin d'assurer une bonne retenue des pièces, accessoires ou outils.

Dans une forme d'exécution, le moyen de fixation est une ventouse à levier dont le corps comporte une saillie dorsale sur laquelle est fixée i'une des extrémités du flexible.

Dans une autre forme d'exécution, le moyen de fixation sur un support est un serre joint composé d'une tige solidaire d'une mâchoire transversale et d'une mâchoire mobile montée coulissante sur la tige, tandis que l'un des embouts du flexible est muni d'un tenon fileté, traversant un alésage ménagé à l'extrémité libre de la tige du serre joint et coopérant avec un écrou de blocage.

D'autres caractéristiques et avantages ressortiront de la description qui suit en référence au dessin annexé représentant deux formes d'exécution de ce bac.
Figure 1 est une vue de face en élévation d'un bac équipé d'une ventouse à levier,
Figure 2 est une vue de côté en coupe transversale,
Figure 3 est une vue partielle en coupe montrant, à échelle agrandie, la structure du flexible et d'un embout,
Figures 4 et 5 sont des vues en coupe montrant deux autres formes de réalisation de la liaison du flexible avec un bac, le bac à la figure 6 étant en cours de mise en place,
Figure 6 est une vue en perspective éclatée avec coupe partielle montrant un bac dans lequel le moyen de fixation est un serre joint.

Ce dispositif est donc essentiellement composé d'un bac 2, d'un flexible 3 et d'un moyen de fixation 4. Le bac 2 est en matière synthétique et est en forme de boîte rectangulaire, ouverte vers le haut.

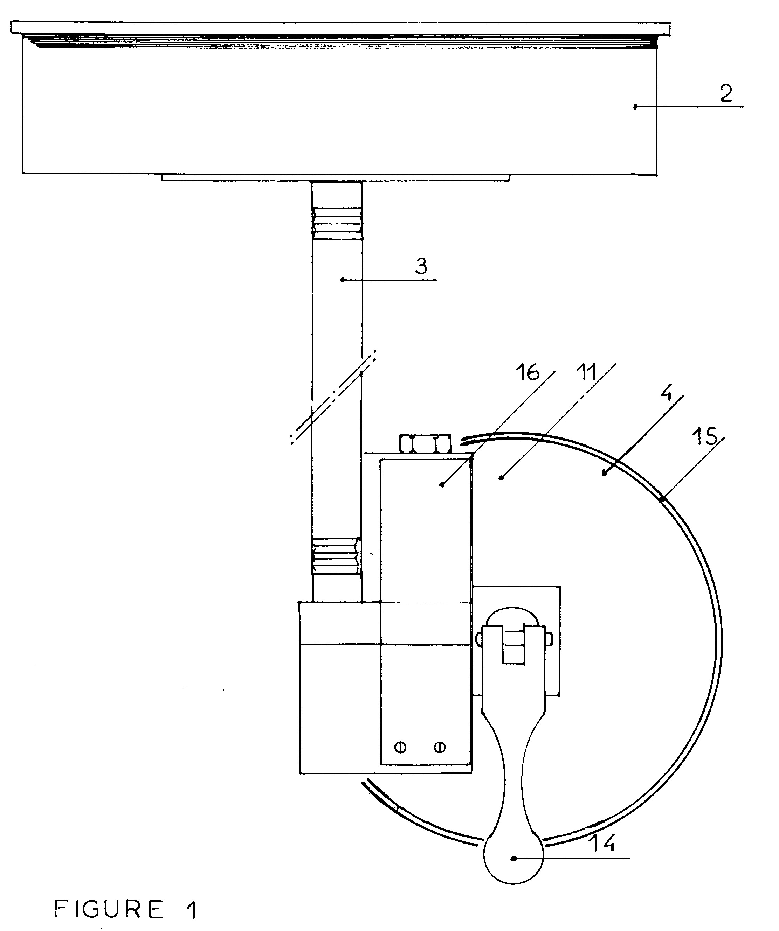

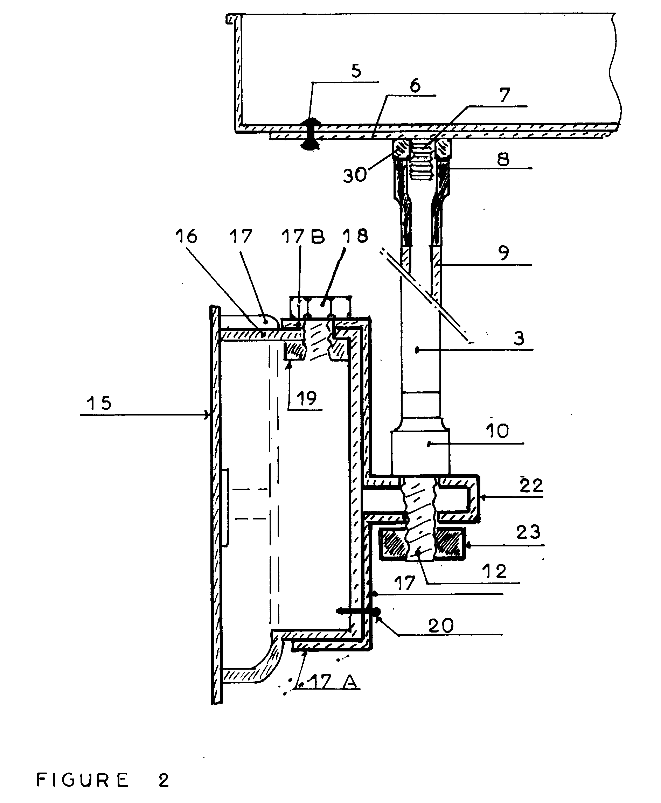

Dans la forme d'exécution des figures 1 et 2, le bac 2 est rendu solidaire, par exemple par des rivets 5, d'une platine de renfort 6 disposée sous son fond. Cette platine est solidaire d'une tige filetée 7, saillant vers Le bas et sur laquelle se visse un embout taraudé 8, solidaire du flexible 3. Plus précisément, cet embout est solidaire du ressort hélicoïdal métallique 9 constituant le corps du flexible et pouvant se déformer tout en conservant la déformation qui lui a été donnée.

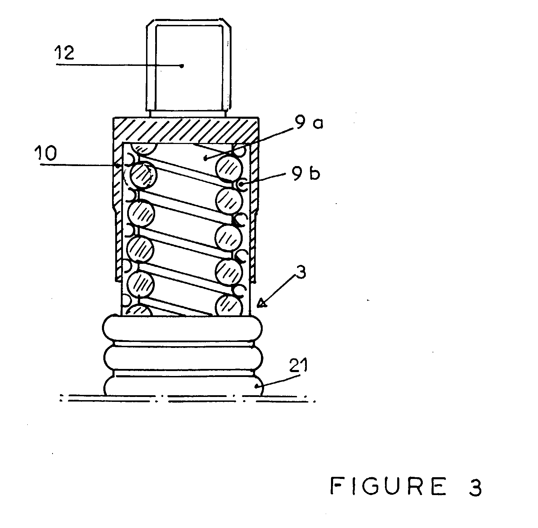

Comme montré plus en détails et à échelle agrandie figure 3, ce flexible est composé d'un ressort hélicoïdal métallique 9a dont les spires sont espacées par un faible intervalle, de valeur inférieure au diamètre du fil les constituant, et par un profilé métallique 9b présentant en section transversale une forme sensiblement triangulaire. Ce profilé est enroulé autour du ressort 9a de manière que l'un de ses angles s'insère entre les spires du ressort en étant pincé par celles-ci. Ce profilé assure, par frottement sur les spires du ressort, le calage en position de ces spires, quelle que soit la position qui leur est donnée manuellement.

L'autre extrémité du flexible 3 est solidaire d'un autre embout 10, prolongé par un tenon axial fileté 12 permettant sa fixation démontable sur le corps de fixation. Les deux embouts rigides 8 et 10 sont sertis sur les extrémités du flexible 3. Ce tube flexible 3 est entouré par un tuyau annelé 21, en matière synthétique, qui assure la finition.

Dans la forme d'exécution représentée aux figures 1 et 2, le moyen de fixation est constitué par une ventouse composée d'un corps 11, portant un levier de commande 14 actionnant une membrane déformable 15, formant la ventouse. Le corps comporte latéralement une partie en saillie 16 qui est enfourchée par les deux ailes 17a et 17b d'une ferrure 17 en forme de C.

La fixation de la ferrure est assurée par une vis 18, traversant l'aile 17b de la ferrure et la paroi frontale de la saillie 16, et se vissant dans un écrou 19, disposé à l'intérieur de cette saillie et par des vis transversales 20, de type Parker, se vissant dans la paroi dorsale de la saillie 16.

La ferrure comporte une patte 22 saillant à l'opposé de la membrane élastique 15 et disposée sensiblement dans le plan diamétral de la ventouse. Cette patte est traversée par un alésage pour le passage du tenon 12 de l'embout 10, coopérant avec un écrou 23.

Le déserrage de cet écrou permet de faire pivoter le bac, de manière que sa plus grande dimension soit adaptée aux besoins de l'utilisateur.

Grâce à la ventouse, ce dispositif d'assistance peut être fixé directement sur une carrosserie ou sur un vitrage et, par conformation du flexible 3, être amené très près de la zone de travail et dans une position telle que son fond soit sensiblement horizontal pour bien retenir les pièces mécaniques, les accessoires ou les outils.

Dans une variante non représentée, le tenon 12 du flexible 3 se visse dans un insert taraudé noyé dans la matière composant la saillie 16 du corps de ventouse et remplaçant l'écrou 19, c'est à dire ayant un axe longitudinal sensiblement parallèle à la membrane 15.

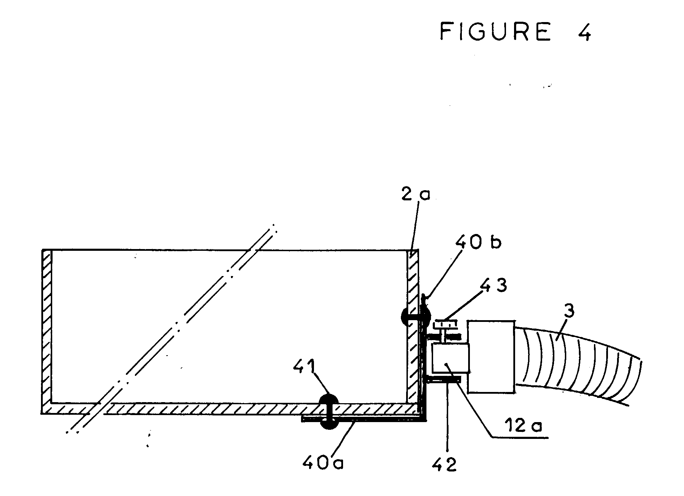

La figure 4 montre une autre forme de montage du bac à l'extrémité du flexible. Le bac 2a est renforcé d'un côté par une équerre métallique dont l'une des ailes 40a est sous le fond du bac et dont l'autre aile 40b est fixée contre un côté de ce bac par des rivets 41 ou équivalents. Cette aile 40b est solidaire d'un manchon 42 saillant sensiblement horizontalement. Dans ce manchon, s'engage le tenon 12a, filetée ou non, de l'embout correspondant du flexible 3. Une vis de blocage 43 est vissée dans le manchon pour assurer la liaison flexible-bac en permettant de régler la position angulaire du bac par rapport au tenon, mais aussi de désolidariser le bac du flexible, par exemple pour le remplacer par un autre bac destiné à recueillir les pièces d'un autre composant d'un véhicule.

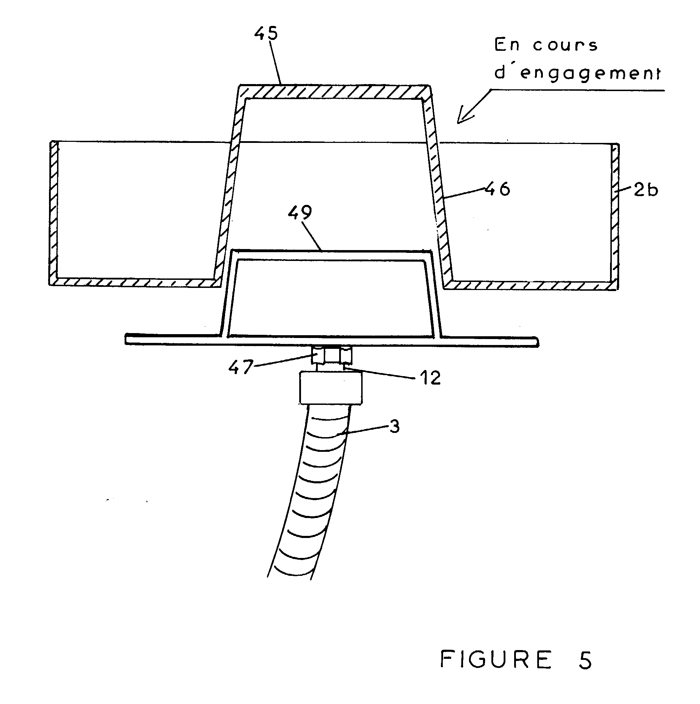

A la figure 5, le bac 2b est amovible et est du type comportant une poignée centrale 45 prolongeant une cheminée centrale 46 débouchant vers le bas pour accueillir la poignée du bac sous-jacent sur lequel le premier bac peut être empilé.

Dans cette configuration, la liaison du flexible 3 avec le bac 2b est assurée en vissant l'embout du flexible 3, muni d'un tenon fileté 12, dans une douille filetée 47, ou dans un écrou, fixée sous le fond d'une platine 48. Cette platine comporte, dans sa partie centrale et au-dessus de la douille 47, un arceau 49 saillant vers le haut et apte à s'emboîter dans la cheminée 46 du bac 2b. Ainsi, le bac peut être retiré et mis en place sans aucune manipulation tout en étant parfaitement maintenu lorsqu'il est posé sur la platine.

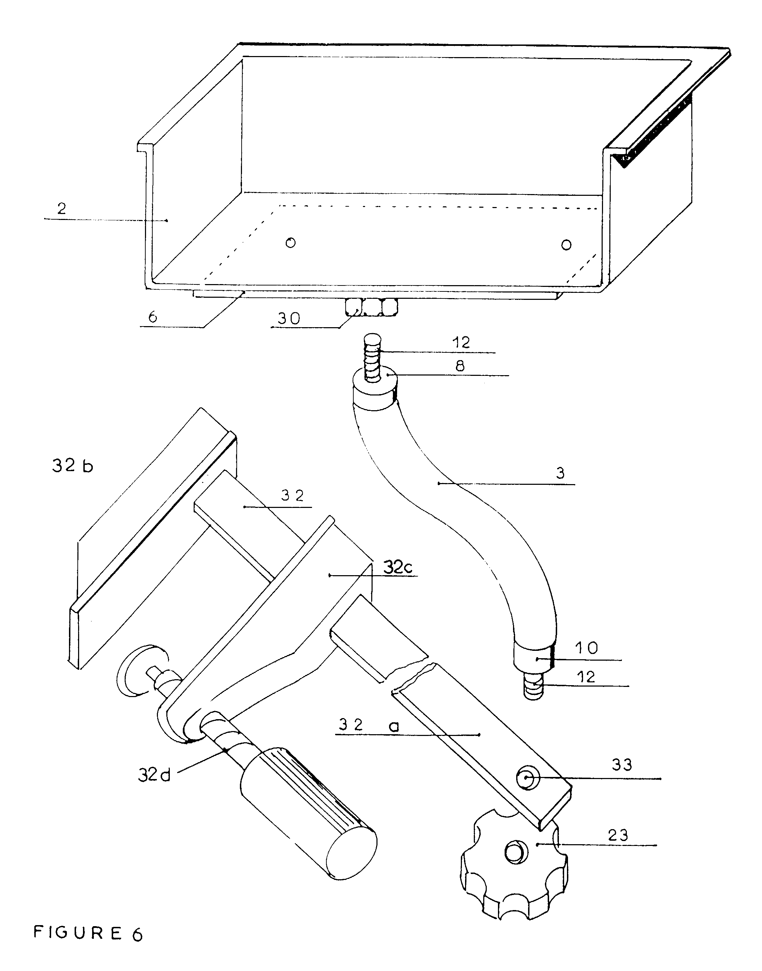

La forme d'exécution représentée à la figure 6 met en oeuvre le bac 2 et un flexible 3 dont l'embout supérieur 8 est équipé d'un tenon fileté 12 apte à se visser dans un écrou 30, soudé sur la platine 6 solidaire du bac 2. Le moyen de fixation est constitué par un serre joint 32 composé d'une tige 32a avec une mâchoire fixe 32b et d'une mâchoire mobile 32c montée coulissante sur cette tige et portant une vis de serrage 32d. La tige 32a est traversée, à proximité de son extrémité libre, par un alésage 33 pour le passage du tenon fileté 12 de l'embout 10 coopérant avec un écrou moleté 23.

Un tel dispositif d'assistance peut être fixé très aisément sur tout support, tel que marche ou montant d'un escabeau, éléments de palissade, montants d'huisserie.

Dans une variante de réalisation non représentée, le moyen de fixation est constitué par une pince sur l'une des branches de laquelle est fixé, de manière réglable, l'embout 10 du flexible 3.

Quelle que soit sa forme d'exécution, ce dispositif d'assistance est d'une très grande utilité pour les professionnels effectuant des travaux manuels, puisqu'il permet d'orienter et de positionner le bac à côté de la zone de travail, en libérant ainsi l'opérateur de toute recherche pour poser des pièces ou ses outils. En améliorant l'organisation du travail, il augmente la rentabilité du chantier.

Il est évident que le bac 2 peut également être circulaire, être réalisé en toute matière, et en particulier être en matière synthétique ou en métal en fonction des applications. Quant au flexible, il peut être plus ou moins long, mais l'usage montre qu'une longueur de l'ordre de 40 centimètres convient à la plupart des applications.

## Revendications

1. Dispositif d'assistance pour travaux manuels comprenant un bac (2) relié par une structure déformable à un moyen de fixation sur un support, caractérisé en ce que la structure entre le bac (2) et le corps (11) du moyen de fixation sur un support est constituée par un flexible (3) composé d'un ressort métallique (9a) enroulé à spires faiblement espacées et d'un profilé métallique (9b) qui, enroulé autour du ressort (9a), présente une section transversale sensiblement triangulaire dont l'un des angles s'insère dans l'intervalle entre spires de ce ressort et est pincé par celles-ci, ce flexible (3), conservant la déformation qui lui est donné manuellement, et étant solidaire, à l'une de ses extrémités d'un embout rigide (8) muni de moyens de liaison filetée avec des moyens complémentaires (30) du bac (2) et, à son autre extrémité, d'un autre embout rigide (10) muni de moyens de liaison filetés (12), ces derniers moyens coopérant avec des moyens complémentaires (16, 22, 23) du corps (11) des moyens de fixation.

2. Dispositif d'assistance selon la revendication 1, caractérisé en ce que, au moins l'un des embouts (10) est solidaire d'un tenon axial fileté (12, 12a).

3. Dispositif d'assistance selon la revendication 1, caractérisé en ce que, au moins l'un des embouts (8) est muni d'un taraudage axial.

4. Dispositif selon la revendication 1, caractérisé en ce que le moyen de fixation est une ventouse à levier dont le corps (11) comporte une saillie dorsale (16) sur laquelle est fixée l'une des extrémités du flexible (3).

5. Dispositif selon la revendication 4, caractérisé en ce que la saillie dorsale (16) du corps (11) de ventouse comporte un insert taraudé dont l'axe est sensiblement parallèle à la membrane (15) de la ventouse et dans lequel se visse un tenon axial fileté (12) ménagé sur l'un des embouts du flexible.

6. Dispositif selon la revendication 4, caractérisé en ce que la liaison entre le flexible (3) et le corps (11) de la ventouse est assurée par une tartufe (17), en forme générale de C, enfourchant une saillie (16) du corps (11) sur laquelle elle est fixée par des vis (18, 20), cette ferrure comportant, sensiblement dans un plan médian diamétral de la ventouse, une patte (22) saillant à l'opposé de la membrane élastique (15) de cette ventouse et comportant un alésage traversant pour le passage de la tige filetée axiale (12) de l'embout (10) du flexible (3).

7. Dispositif d'assistance selon la revendication 1, caractérisé en ce que le bac (2) est en matière synthétique et son fond est solidaire d'une platine de renfort métallique (6) sur laquelle est soudé un moyen de liaison fileté, vis (7) ou écrou (30), apte à coopérer avec un moyen complémentaire, taraudé ou fileté, ménagé à l'extrémité de l'embout (8, 10) du flexible (3).

8. Dispositif d'assistance selon la revendication 1, caractérisé en ce que le bac (2a) est en matière synthétique et est renforcé d'un côté par une équerre métallique fixée sur lui, cette équerre étant composée d'une aile (40a) venant sous le fond du bac (2a) et d'une aile (40b) qui, venant contre un côté du bac (2a), est solidaire d'un manchon (42) saillant sensiblement horizontalement, ce manchon étant traversé radialement par une vis (43) de blocage d'un tenon (12a) ménagé sur l'un des embouts du flexible et engagé dans ce manchon.

9. Dispositif selon la revendication 1, caractérisé en ce que, pour la liaison du flexible avec un bac (2b) en matière synthétique comportant une poignée centrale (45) prolongeant une cheminée centrale (46) débouchant vers le bas, l'un des embouts du flexible (3) comporte un tenon fileté (12) qui est vissé dans une douille filetée (47) saillant de la face inférieure d'une platine (48) de réception du bac (2b) et cette platine comporte, en saillie vers le haut, un arceau (49) apte à s'emboîter dans la cheminée (46) du bac.

10. Dispositif selon la revendication 1, caractérisé en ce que le moyen de fixation sur un support est un serre joint (32) comprenant une tige (32a) solidaire d'une mâchoire transversale (32b) et une mâchoire mobile (32c) montée coulissante sur la tige, tandis que l'un des embouts (8, 10) du flexible (3) est muni d'un tenon fileté (12), traversant un alésage ménagé (33) à l'extrémité libre du serre joint et coopérant avec un écrou (23) de blocage.
